# EUROPEAN PATENT SPECIFICATION

(11) **EP 1 828 313 B1**
(45) Date of publication and mention of the grant of the patent: **11.06.2008**
(21) Application number: 05857993.9
(22) Date of filing: 20.12.2005
(51) Int. Cl.: C08L 101/00, C08L 53/02, C08L 67/02, C08L 75/04

(54) **HIGH MELT STRENGTH THERMOPLASTIC ELASTOMER COMPOSITION**
HOCHSCHMELZFESTE THERMOPLASTISCHE ELASTOMERZUSAMMENSETZUNG
COMPOSITION ÉLASTOMÈRE THERMOPLASTIQUE POSSÉDANT UNE RÉSISTANCE À LA FUSION ÉLEVÉE

(30) Priority: 24.12.2004 EP 04106986
(43) Date of publication of application: 05.09.2007
(73) Proprietor: KRATON Polymers Research B.V., 1030 BH Amsterdam (NL)
(72) Inventor: MUYLDERMANS, Xavier, Kraton Polymers Res. S.A., B-1348 Ottignies-Louvain-La-Neuve (BE); COIGNOUL, Emmanuelle, Kraton Polymers Res. S.A., B-1348 Ottignies-Louvain-La-Neuve (BE)
(74) Representative: Kortekaas, Marcel C.J.A.
(86) International application number: PCT/EP2005/056989
(87) International publication number: WO 2007/000191

(56) References cited:
- EP-A- 0 573 862
- WO-A-03/082971
- US-A- 6 127 444
- US-A1- 2003 013 813
- US-B1- 6 303 200

## Description

### Technical Field

The present invention relates to a high melt strength thermoplastic elastomer composition, to a process for the manufacture of shaped elastomeric articles and to shaped elastomeric articles derived from said composition. More in particular the present invention relates to a thermoplastic elastomer composition, comprising at least one linear crystalline polyolefin of very high molecular weight distribution and at least one thermoplastic elastomer (which itself may be a blend). The novel composition may be used in processes involving a non supported elongation step, whilst the composition is in melt, like foaming, film blowing, fiber drawing, blow moulding, profile extrusion and thermoforming, and more in particular extrusion foaming.

### Background Art

A thermoplastic elastomer (TPE) is a material that exhibits rubber-like characteristics, yet may be melt processed with most thermoplastic processing equipment, such as by extrusion. The thermoplastic elastomer may be a block copolymer, but also a thermoplastic vulcanizate, in other words an elastomer-plastic blend comprising finely divided elastomer particles dispersed in a relatively small amount of plastic, generally made by a method called dynamic vulcanization. The rubber-like characteristics typically desired are high extensibility, mechanical recovery, resiliency, and low temperature ductility. Such products are known from e.g., THERMOPLASTIC ELASTOMERS, A Comprehensive Review. LEGGE,. Munich Vienna New York: Hanser Publishers, 1987. ISBN 3446148272.

In
US 4898760 --.
a process and apparatus are described for extruding a soft, low density elastomeric thermoplastic foam. The foam is made of a melted SANTOPRENE ^{™}/blowing agent mixture, SANTOPRENE being a thermoplastic elastomer prepared by dynamic vulcanization of blends of olefin rubber as elastomer with polyolefin resin as plastic. However, said foamable compositions and articles prepared thereof suffer from serious drawbacks. For instance it is very difficult with those compositions to obtain simultaneously highly closed cell structure, a smooth skin and an acceptable density reduction due to their non acceptable melt strength to flow ratio.
US 6303200 concerns a composition " made with a melt strength enhancing agent of a homopolymer or copolymer of polypropylene having free-end long chain branches of polypropylene units" . WO 3082971 also concerns compositions based on BRANCHED polyolefins. This is rather clear from the abstract wherein it is said that compositions based on branched polyolefins are better than compositions based on linear polyolefins.

From US 6127444 polymeric compositions were known, comprising:
a) a block copolymer, comprising at least two external monovinyl aromatic hydrocarbon blocks and at least one internal hydrogenated conjugated diene block, wherein the total monovinyl aromatic hydrocarbon content was from 20 to 50 % by weight and the total apparent molecular weight was from 140,000 to 400,000 g/mol:
b) from 50 to 250 parts by weight per 100 parts by weight of component (a) of a plasticizer,
c) from 10 to 100 parts by weight per 100 parts by weight of a polybutene-1 polymer having a melt index at 2.16 kg/190°C of from 0.05 to 40.0; and
d) a blowing agent This reference further relates to the use of the composition for the preparation of foamed compounds. However, said document did not provide evidence of any examples exhibiting high melt strength; none showed a melt strength above 0.11 N.

From EP 0573862 A crystalline polymers and copolymers of propylene were known having total MIL values > 2 g/10 minutes, total [eta] values in tetrahydronaphthalene at 135°C ≤ 2.8 dl/g, M_{w}/Mₙ values > 20, a fraction insoluble in xylene at 25°C ≥ 94, and comprising from 10 to 60% by weight of a fraction (A) having [eta] ≥ 2.8, that are prepared by way of sequential polymerization in at least two stages, In the presence of particular Ziegler-Natta catalysts supported on magnesium halides. Said polymers have high melt strength, high mechanical properties, and are particularly adequate for the manufacture of articles by using various conversion technologies, such as for example extrusion in thin sheets to be subjected to thermoforming, as well as for injection molding, and blow molding. However, in this document there is no suggestion to the application of said crystalline polymer or copolymers In high melt strength thermoplastic elastomer compositions as specified hereinafter.

From
EP0794226 A-.
a foamable olefin thermoplastic elastomer composition is known comprising (A) a partially cross-linked thermoplastic elastomer composition, (B) long-chain branch-containing polypropylene and (C) a foaming agent. The partially cross-linked thermoplastic elastomer composition (A) is obtained by dynamically heat-treating a mixture in the presence of organic peroxide, said mixture comprising specific proportions of a peroxide cross-linking type olefin copolymer rubber (a), which is an ethylene/ alpha-olefin copolymer rubber composed of ethylene, an alpha-olefin of 3 to 20 carbon atoms and optionally a nonconjugated diene, and a peroxide-decomposition type olefin plastic (b), which is an alpha-olefin (co)polymer containing a specific amount of an alpha-olefin of 3 to 20 carbon atoms and having a specific MFR. Also disclosed is a foamed product obtained by heating the foamable olefin thermoplastic elastomer composition. From the foamable olefin thermoplastic elastomer composition, a foamed product having an expansion ratio of at least 2 times, being free from surface roughening caused by defoaming, being soft to the touch and showing excellent heat resistance and weathering resistance can be produced with high productivity through simplified steps. None of the polyolefins specified as component (B) or (b) are high melt strength linear crystalline polyolefin with PI ≥ 20. In addition, component (b) is relatively expensive and such peroxide partially cured TPE (A), modified by a branched high melt strength PP does not exhibit strongly improved melt strength.

In
US 6221964 --.
foamable polymeric compositions are claimed, comprising a thermoplastic elastomer on the basis of a polyolefin and an at least partially vulcanised rubber, in an amount in the range of from 25-85 wt%, based on the weight of the polyolefin and the rubber, wherein the polyolefin is a polypropylene homo or copolymer, having: a weight average molecular weight M (determined using GPC at a temperature of 145°C) of at least 200,000, and an elongational viscosity (measured at a temperature of 170°C at a rate of elongation of 0.03 s⁻¹ and at a time of 10 s) EV (170/10) of at least 14,000 Pa.s. The authors of this reference did not realise that MWD is the critical element for good balance of melt strength/flow and as a result did not find the most suitable polyolefin.

From
US 6503985--.
was known a thermoplastic vulcanizate prepared by a process comprising the steps of dynamically vulcanizing a vulcanizable rubber within a mixture that includes from about 15 to about 90 percent by weight of the rubber and from about 10 to about 85 percent by weight of a long-chain branched thermoplastic resin, where the long-chain branched thermoplastic resin is (i) an alpha-olefin polymer, (ii) a copolymer of an alpha-olefin and an alpha-omega-olefin diene, or (iii) a mixture thereof, where the long-chain branched thermoplastic resin is characterized by a weight average molecular weight from about 100,000 to about 600,000, a number average molecular weight from about 40,000 to about 200,000, a z-average molecular weight from about 400,000 to about 2,000,000, a <g'>ᵥᵢₛ from about 0.2 to about 0.95, and a melt flow rate from about 0.3 to about 30 dg/min. Not any reference was made to the use of linear crystalline alpha-olefin polymers or to the use of linear alpha olefin copolymers having a M_{w} /Mₙ > 5 in high melt strength thermoplastic elastomer compositions. Moreover, there was not any reference in said document to a specific range of compression set values, which suitable vulcanisable rubber components must have.

In
WO 9964510 --.
thermoplastic elastomer compositions are described having improved processability while maintaining good physical properties that are prepared from a mixture of olefinic rubber and a polypropylene composition having a melt flow rate in the range of from about 0.5 to about 5 dg/min. and a molecular weight distribution M_{w} /Mₙ of greater than 5.5 up to about 20. The rubber component of the mixture may be at least partially cured by dynamic vulcanization. Preferably said polypropylene polymer composition had a molecular weight distribution in the range of from 6 to 15 and had a melt flow rate in the range of about 0.5 to 4 dg/min.

From
US 6646056 --.
polymer compositions are known that are useful as thermoplastic elastomers for extrusion, calendering, blow molding, thermoforming, and foam processing. Such improved melt strength thermoplastic elastomers include a blend of propylenic resin (A) and ethylenic elastomer (B), wherein the (A) resin is partially branched and/or the (B) elastomer is partially crosslinked by the addition of multifunctional acrylic monomer (C) containing at least three acrylate groups. Whilst showing improved processability and mechanical performance, no evidence was presented regarding significant melt strength improvements. No reference is made to TPE modified with high MWD polyolefin, with a PI ≥ 20.

In
EP 1491578 A --.
, foamable compositions are exemplified that are usable for the manufacture of foamed, flexible, heat resistant, thermoplastic elastomeric articles, and which comprise at least:
(a) 100 parts by weight of one ore more selectively hydrogenated block copolymers, having at least two resinous blocks A of non-hydrogenated predominantly polymerized monovinyl arene, and a selectively hydrogenated elastomeric block B, wherein said block B prior to hydrogenation being predominantly a polymerized conjugated diene or dienes, said block copolymer having a total apparent molecular weight of at least 250 kg/mole, and containing polymerized monovinyl arene blocks of true molecular weight of at least 18 kg/mole,
(b) 5 to 50, preferably from 15 to 40 parts by weight of one or more selectively hydrogenated block copolymers having at least two resinous blocks A' of non-hydrogenated predominantly polymerized monovinyl arene, and an selectively hydrogenated elastomeric block B', wherein said block B' prior to hydrogenation has been derived from a polymerized conjugated diene or dienes as a major component which may be mixed with minor proportions of other copolymers (e.g. vinyl aromatic) i.e. ≤ 25 wt%, and said block copolymer having a total apparent molecular weight in the range of from 50,000 to 180,000, while the resinous blocks A' shown an true molecular weight in the range of from 3 to 20 kg/mole and preferably from 5 to 15 kg/mole,
(c) from 25 to 80 parts by weight of a linear crystalline polymer comprising propylene as major component, with a Vicat softening temperature in the range of from 130°C to 180°C and a MFR in the range of from 0.5 to 30 dg/min and a polydispersity index of from 4.5 to 6,
(d) from 100 to 250 parts by weight of a softener compatible with blocks B and B',
(e) from 0.01 to 3 wt%, relative to the weight of the primary components (a) up to (e) of a solid chemical nucleating agent of the endothermic group in combination with a blowing agent, and optionally
(f) one or more secondary components selected from PPO and/or any resins compatible with block copolymer component (a), antioxidants, UV-stabilizers, flame retardants, surface modifying agents and inorganic fillers.

However, the thermoplastic elastomer compositions disclosed in said hereinbefore discussed documents did not show a combination of high elasticity (high elastic recovery) with high melt elasticity (melt strength) together with an easy deformability (low shear viscosity or high flow), as presently required by industry in order to enable an efficient processing involving a melt elongation step like in foaming for instance. It will be appreciated that e.g. for foaming a high flow is required to enable easy growth of the bubbles while high melt strength is required at the same time to avoid breakage of the walls formed between the bubbles leading to unacceptable level of open/broken cells.

It will be appreciated that there is strong need for further improved thermoplastic elastomer (TPE) compositions, which still show excellent elastomeric properties in end-uses and improved processability mostly in the melt processes requiring good flow and higher melt strength or higher melt strength hardening behaviour. More in particular there is a need for materials which are useful in processes involving a non supported elongational step like foaming, film blowing, fiber drawing, blow moulding, profile extrusion, and thermoforming, and more in particular in extrusion foaming. Therefore an object of the present invention is to provide such TPE compositions aimed at. Another object of the present invention is to provide a process for foaming such a modified TPE composition. Still another object of the present invention is formed by shaped foamed elastomeric articles, derived from the hereinbefore mentioned TPE compositions.

As result of extensive research and experimentation it has now surprisingly been found that elastic TPE, modified with very high MWD, PP (PI>20) is not only considerably improved in melt strength as discussed hereinbefore, but moreover improved with a low content of such polypropylene (less than 15 wt% of the TPE and PP composition.) This implies that existing TPEs can be significantly improved as far as their melt strength is concerned without affecting significantly their mechanical performances.

### Disclosure of Invention

Accordingly a high melt strength thermoplastic elastomer composition is provided, comprising:
(i) at least one linear crystalline polyolefin, having a melting temperature (Tm) of at least 100°C and a Polydispersity Index (PI) of more than 20, determined by means of an isothermal dynamic frequency sweep at 190°C and calculated by means of the equation PI=100,000/Gc, wherein Gc is expressed in Pascal and represents the crossover modulus (Gc=G'=G") and
(ii) at least one thermoplastic elastomer (TPE) or a blend behaving as TPE, wherein the TPE or the blend are compatible with the polyolefin (i), and have a compression set below 50% at ambient temperature after 24h compression (ASTM D395-03, "Compression Set under constant deflection in air"), wherein the amount of component (i) is in the range of 0.1 to 15 wt% calculated on the whole of (i) and (ii).

Moreover the invention also provides a process for the manufacture of shaped articles, by processing the hereinbefore defined TPE compositions, involving a non supported elongational step, like foaming, film blowing, fiber drawing, blow moulding, profile extrusion, or thermoforming, and more in particular foaming, and to shaped articles obtainable by the hereinbefore specified process. The invention further provides a premix useful in the preparation of the composition.

### Mode for the Invention

Following is a description of the respective ingredients, which may be used to formulate the TPE compositions of this invention.

Component (i) is a linear, crystalline polyolefin or a mixture thereof. It is characterized by having a Polydispersity Index (PI) of more than 20, preferably of more than 20 to 50, more preferably up to 40, most preferably up to 30.

The polydispersity index, has been defined by
**ZEICHNER,. A** Comprehensive Evaluation of Polypropylene Melt Rheology. *Proc. 2nd world congr.,* Chem. Eng., 1981 vol. 6, p. 333-373.
. It is related to the molecular weight distribution through a strong correlation with M_{w}/Mₙ, and is determined by means of an isothermal dynamic frequency sweep, performed for instance on a Rheometric RDA2 dynamic mechanical analyser, within the linear viscoelastic region of the molten material (e.g., temperature 190°C, strain amplitude 10%, frequency rate 0.1-500 rad/s, data collection at 10 data points per decade). The PI is calculated by means of the equation PI=100,000/Gc, wherein Gc is expressed in Pascal and represents the crossover modulus (Gc=G'=G") obtained in a frequency sweep at 190°C, as is known from e.g.
US 6300420 --.

Component (i) is preferably derived from propylene as predominant or sole monomer. Suitably these high PI polypropylenes or propylene copolymers have a melting temperature of at least 130°C. Polyolefins are often characterized by way of Melt Flow Rate (MFR, determined in accordance with ASTM D 1238 (condition L)). Polymers suitable in the present composition have a MFR ranging from 0.05 to 50 dg/min., preferably from 1 to 10 dg/min. They will normally have a number average molecular weight (Mn) in the range of from 10,000 to 250,000 g/mole.

Preferred polyolefins are semi crystalline homopolymers of propylene, but random copolymers of propylene as main monomer and one or more other α-olefin comonomers having 2-6 carbon atoms, such as ethylene, 1-butene, isobutylene, 1-pentene, in an proportion of at most 20 wt% of the total monomer mass, can also be suitably used in the composition of the present invention. More preferred polypropylene copolymers have been derived from propylene, mixed with from 1 to 5 wt % of ethylene.

Thus the term "polypropylene" as used throughout the specification is intended to cover both homopolymers and copolymers of propylene.

The preparation of component (i) is known and not part of the present invention. For instance, polypropylenes suitable for use herein may be prepared by combining polypropylenes prepared in separate reactors under differing polymerisation conditions or by sequential polymerisation of monomer in at least two separate reactor zones wherein differing polymerisation conditions in each zone favour the production of polypropylene having different MFR and Molecular Weight Distribution properties.

More preferably the linear polyolefin component (i) to be used in the compositions of the present invention are manufactured by means of a multi-zone circulating reactor system (loop reactor), wherein bimodality of the polymer is created within one single reactor, operating at different conditions between various zones inside the reactor, resulting in polymer particles, having an onion like structure, comprising layers being of a different Mm. In such process the catalyst is continuously fed to the multi-zone circulating reactor. In a specially designed loop-reactor consisting of two reactor zones, the growing polymeric granules are circulated between the two different zones. In one "riser" zone the polymer particles are entrained upward in a fast fluidisation regime by the monomer gas flow from a blower, while in the top of the reactor the polymer particles enter a section, wherein a downward dense-phase plug-flow regime under gravity occurs. At the bottom of the reactor the polymer particles are again fed to the "riser " section

Preferred linear, crystalline polypropylenes (i) have a Tm of above 140°C.

According to a preferred embodiment of the compositions of the present invention, the linear, crystalline polypropylene component (i) occurs in a proportion of from 0.1 to 10 wt%, more preferably of from 1 to 5 wt% relative to the weight of the components (i) and (ii).

Component (ii) of the composition is the thermoplastic elastomer (TPE) or rubber component of the composition. It is defined by the compression set, here determined in accordance with test Method B of ASTM D395-03 "Compression set under constant deflection in air". A further feature of the component (ii) is that it should be compatible with component (i), which is a polyolefin. Compatibility is a property that those skilled in the art are quite familiar with and generally requires no more than the preparation of a blend and visual inspection of the blend.

Examples of thermoplastic elastomers that may be used in the composition of the present invention may be found in the review by Messrs Legge, Holden and Schroeder, cited in paragraph [0002] of this specification. The thermoplastic elastomers discussed in this review include graft and block copolymers as well as melt-mixed polymers that exhibit thermoplastic elastomer behaviour upon dynamical vulcanization.

Suitable thermoplastic elastomers discussed in this review include:
thermoplastic polyurethane elastomers;
thermoplastic polyester elastomers;
polyesteramide and polyetherester amide thermoplastic elastomers, as well as polyether block amide thermoplastic elastomers ;
thermoplastic elastomers based on polystyrene-polydiene block copolymers (Chapters 3, 4, 12-14);
Poly-alpha-olefin based thermoplastic elastomers: and
elastomer-thermoplastic blends, when dynamically vulcanized.

Significant improvements have, for instance, been found for TPE compositions wherein component (ii) is a thermoplastic polyester elastomer such as HYTREL^{™}.

Component (ii), however, is preferably a thermoplastic elastomer selected from the last two classes of TPEs mentioned above: thermoplastic elastomers based on polystyrene-polydiene block copolymers (which definition includes polymers made with styrene analogs and copolymers containing a further monomer), and dynamically vulcanized blends of elastomer- thermoplastic blends (so-called TPV's). Component (ii) may also be a mixture of one or more of these components as well as a blend thereof with a plastic (for instance a polyolefin with a PI of less than 20), a blend thereof with a plasticizer (e.g., an oil) or a combination thereof. These preferred components (ii) are discussed in further detail hereinafter.

Thermoplastic elastomers based on polystyrene-polydiene block copolymers are known. For thermoplastic elastomer behaviour, these so-called styrenic block copolymers comprise at least two blocks of polystyrene or similar rigid block segment and at least one block of poly(conjugated diene) or similar elastomeric block segment within the polymer chain. It is possible to hydrogenate styrenic block copolymers completely, including the aromatic unsaturation of the polystyrene blocks. However, it is preferred that only the elastomer block is hydrogenated to improve the stabilization and aging properties of the TPE. This elastomer block or the elastomer blocks are preferably selectively hydrogenated until a residual ethylenic unsaturation of less than 20% and preferably less than 10% of the original value.

Preferred styrenic block copolymers are those having the formulae: ABA, (AB)ₙX, ABAB' or ABA'B' respectively, wherein A and A' represent a poly(monovinyl aromatic) block and B and B' represent hydrogenated poly(conjugated diene(s)) blocks, wherein n is an integer ≥ 2 and wherein X is the remainder of a coupling agent. It will be appreciated that the blocks A and A', and B and B' respectively are equal or different from each other, in that the blocks A are larger than the blocks A' and the blocks B are larger than B' or B and B' are equal.

Most preferred block copolymers have the formulae ABA or (AB)ₙX, wherein A represents a polymer block of one or more monovinyl aromatic monomers selected from styrene, C₁-C₄ alkylstyrene and C₁₋₄ dialkylstyrene and in particular styrene, α-methylstyrene, o-methylstyrene or p-methylstyrene, 1,3-dimethylstyrene, p-tert-butylstyrene or mixtures thereof and most preferably styrene only, wherein B represents a polymer block of one or more conjugated diene monomers containing from 4 to 8 carbon atoms, such as 1,3-butadiene, 2-methyl-1,3-butadiene (isoprene), 2,3-dimethyl-1,3-butadiene or mixtures thereof, and preferably butadiene or isoprene and most preferably butadiene.

Preferred block copolymers ABA or (AB)n X comprise substantially pure poly(styrene) blocks, each having a true molecular weight in the range of from 3 kg/mole to 50 kg/mole while the total apparent molecular weight is in the range of from 70 to 700 kg/mol and preferably from 100 to 500 kg/mol. The molecular weights referred to in this specification and claims can be measured with gel permeation chromatography (GPC) using polystyrene calibration standards, such as is done according to ASTM 3536. GPC is a well-known method wherein polymers are separated according to molecular size, the largest molecule eluting first. The chromatograph is calibrated using commercially available polystyrene molecular weight standards. The molecular weight of polymers measured using GPC so calibrated are apparent molecular weights, also known as styrene equivalent molecular weights. The styrene equivalent molecular weight may be converted to true molecular weight when the styrene content of the polymer and the vinyl content of the diene segments are known. The detector used is preferably a combination ultraviolet and refractive index detector. The molecular weights expressed herein are measured at the peak of the GPC trace, converted to true molecular weights, and are commonly referred to as "peak molecular weights".

Preparation methods for such polymers may be found in
US 3231635**;**
US 3251905**;**
US 3390207**;**
US 3598887
and
US 4219627**,**
in
EP 0413294 A**;**
EP 0387671 A
and
EP 0636654 A**,**
and in
WO 9422931**.**
Processess for the selective hydrogenation of the B blocks were known from e.g.
US 3113986**;**
US 3700633**;**
US 4226952**;**
US 5039755
and
US RE27145

Suitable representatives of said most preferred block copolymers are those available under the trade names KRATON®, SEPTON^{™} and TUFTEC^{™}, for instance KRATON G 1650, KRATON G 1651, KRATON G 1652, KRATON GMD 6917 ES, KRATON GMD 6933 ES, KRATON G 1657, KRATON GRP 6924, SEPTON 4055, SEPTON 4077 and TUFTEC H 1272, comprising usually poly(conjugated diene) blocks being hydrogenated until less than 10% of the original ethylenic unsaturation.

Like most conventional vulcanized rubbers - and unlike most thermoplastics - TPEs are hardly ever used commercially as pure materials. To achieve the particular requirements for each end use, they are compounded with other polymers, oils, resins, fillers. Thus, it is very common to mix block copolymers of different molecular weight or chemical composition. It is also very common to use a blend of one or more styrenic block copolymers, particularly the (selectively) hydrogenated styrenic block copolymers, with a plastic and/or plasticizer, usually a polypropylene or similar polyolefin resin (having a PI of less than 20, generally less than 5) as plastic and/or an oil as plasticizer. Such blends are used by compound formulators as alternative for the pure styrenic block copolymer, provided that the blend remains compatible with component (i) and still meets the compression set parameter. Such blends therefore typically comprises from 15 to 90 wt%, preferably from 20 to 80 wt% of one or more elastomers as defined hereinbefore, preferably one or more styrenic block copolymers as defined hereinbefore, of from 0 to 40 wt%, preferably from 5 to 25 wt% of one or more thermoplastic polyolefins different from component (i), and of from 5 to 90 wt%, preferably from 30 to 80 wt% of one or more plasticizers calculated on the weight of the complete TPE blend (ii).

Suitable plasticizers and thermoplastics are known and described, for instance, in the patent literature discussed in the background section of this application. The plasticizer may for instance be an oil, generally a paraffinic, naphtenic or aromatic oil derived from petroleum fractions, but preferably a paraffinic oil. Oils with high aromatic contents are generally avoided in case of styrenic block copolymers, as they plasticize the polystyrene domains. Examples of alternative plasticizers are aliphatic synthetic plasticizers or oligomers of randomly or sequentially polymerised styrene and conjugated diene, oligomers of conjugated diene such as butadiene or isoprene, liquid polybutene-1 and ethylene propylene rubbers, all having a weight average molecular weight in the range of from 300 to 30,000, preferably from 500 to 25,000 and more preferably from 500 to 10,000 g/mole.

In terms of dynamically cured TPE compositions for use as component (ii) reference is made to US 3037954, which discloses the technique of dynamic vulcanization wherein a vulcanizable elastomer is dispersed into a resinous thermoplastic polymer and the elastomer is cured while continuously mixing and shearing the polymer blend. The resulting composition is a microgel dispersion of cured elastomer, such as EPDM rubber, butyl rubber, chlorinated butyl rubber, polybutadiene or polyisoprene in an uncured matrix of a thermoplastic polymer such as polypropylene. These so-called TPV's may be made for instance by the methods found in
US 4130534**;**
US 4130535**;**
US 4594390**;**
US 5100947**;**
US 5157081**;**
US 5177147**,**
US 5290886
and in
WO 9202582**.**

The vulcanizable elastomer may be prepared by the polymerization of one or more, usually two or more, alpha-monoolefins, preferably with a polyene, generally a diene. Examples of such components include ethylene-propylene rubber (EPM) or the terpolymer of ethylene, propylene and a diene monomer (EPDM). Butyl rubbers may also be used, which expression includes polymers and copolymers of an iso-olefin. Other vulcanizable elastomers include styrene-butadiene rubbers, polydienes and natural rubber.

The vulcanizable elastomer may be a thermoplastic elastomer by itself, for instance a styrenic block copolymer.

Suitable TPV's that are available commercially are those sold under the trademarks SANTOPRENE^{™}, RTP^{™}, UNIPRENE^{™} or for instance sold as DuPont^{™} ETPV.

Again, these TPV's may comprise a plasticizer and/or a plastic, similar at the styrenic block copolymers described hereinabove.

The compositions of the invention may include reinforcing and non-reinforcing fillers, antioxidants, stabilizers, lubricants, anti-blocking agents, anti-static agents, waxes, foaming agents, pigments, flame retardants and other processing aids known in the rubber compounding art. Such additives can each occur in a proportion of up to 60 wt% of the total composition. Fillers and extenders which can be utilized include conventional inorganics such as calcium carbonate, clays, silica, talc titanium dioxide, carbon black.

According to a preferred embodiment of the present invention the high melt strength thermoplastic elastomer compositions are prepared by mixing component (i) with a component (ii) in the specified ratio. Preferably the apparent viscosities of the components (i) and (ii) do not differ than a factor 10 under the usual average mixing condition, i.e., a mixing temperature of about 200°C and a shear rate of about 200 s⁻¹ (ASTM-D3835).

According to a more preferred embodiment of the present invention the hereinbefore specified high melt strength thermoplastic elastomer composition is prepared via the initial preparation of a premix (iii), that acts as a homogeneous melt strain hardening additive, which comprises from 10 to 60 wt% and preferably from 20 to 50 wt% of component (i), and from 40 to 90 wt% of a TPE component (ii) and preferably from 50 to 80 wt%, relative to the weight of components (i) and (ii). Said premix is subsequently mixed with sufficient amount of a component (ii) to form the finally desired composition and is prepared by a process comprising mixing component (i) and a part of component (ii) in an extruder or similar mixing equipment.

A process for the preparation of a composition according to any one of claims 1 to 9, wherein the premix of claim 10 is mixed with an amount of a component (ii) sufficient to reduce the content of component (i) from a range of 10 to 60 wt% to the defined range of from 0.1 to 15 wt%, preferably from 0.1 to 10 wt%, more preferably from 1 to 5 wt%.

Suitably single screw or twin-screw extruders are used, e.g., wherein the extruder screws are characterized by at least one mixing zone and by a screw design ensuring an efficient mixing without degrading the component (i), which is sensitive to radical degradation. The conditions for mixing the components (temperature, shear and mixing time) should be selected such as to avoid degradation of the crystalline polyolefin used as component (i) as much as possible. Suitable mixing temperatures are in the range starting with the plastic polyolefin melting temperature and limited at higher temperature by the thermal degradation of the polyolefin typically happening significantly above 250°C. A preferred temperature range is ranging from 150 to 230°C. A second important factor allowing effective mixing is the shear generated in the extruder which calls for the existence of at least one mixing zone. Shear degradation of the ingredient (i) can happen in very high shear mixing zones typically when non fully molten material reach that mixing zone without the presence of any low viscosity processing aid material. Mixing zones design by machine manufacturers for 'shear sensitive materials' are thus preferred equipments. A third well know degradation factor to be avoided when mixing (i) is to the presence in the mixing environment of oxygen, peroxide or radical generating species. Care must be taken to avoid the presence of the generation of those species as soon as the ingredient (i) is present in the mixing or processing steps. The use of antioxidant(s) and as well as peroxides scavenger(s) and radical scavenger(s) is a good practise to avoid uncontrolled degradation during mixing. The above steps are practical ways to ensure efficient mixing of the final high melt strength composition without degrading the high melt strength linear crystalline polyolefin (i).

The reason for this preferred embodiment is that it enables a better distribution of the component (i) in the final composition. A higher concentration of the component (i) in the premix may be possible. However, this will not improve the distribution in the final product.

It will be appreciated that another aspect of the present invention is formed by a process for the preparation of shaped polymeric articles, using a hereinbefore specified TPE composition of the present invention as starting material, and comprising a non-supported elongational step like foaming, blow moulding, profile extrusion, calendaring or thermoforming, and in particular foaming.

Moreover, still another aspect of the invention is formed by shaped foamed, flexible TPE articles made of a high melt strength thermoplastic elastomer composition according to claims 1-9 obtainable by said process claim 13 and preferably those having a foam density of below 600 kg/m³.

The thermoplastic elastomeric compositions of this invention can be foamed by using conventional foaming procedures, which are well known in the art. In general, these procedures include (1) heating the TPE composition to a temperature above the melting point of component (ii), (2) adding a blowing agent or a compound generating a blowing agent, and (3) releasing the TPE composition containing the blowing agent to atmospheric temperature and pressure. Before reaching phase (3), the melt may be cooled down to reduce the gas pressure of the blowing agent and to increase the melt strength of the TPE. Depending on the type of blowing agent employed, the blowing agent may be added to the TPE composition prior to heating it in the foaming process, although it is preferred to add the blowing agent directly to the TPE composition while it is in its molten state. Also, high pressure is typically required to prevent the foaming agent from prematurely expanding prior to releasing the TPE composition to atmospheric temperature and pressure. Where a chemical blowing agent is employed, the step of heating should heat the TPE composition and blowing agent high enough to trigger the chemical decomposition of the blowing agent. The residence time in the high temperature environment should be adapted to reach a full decomposition of the chemical blowing agent. Obviously, the blowing agent should be properly distributed in the TPE to ensure homogeneous foaming expansion. High L/D single screw extruders are preferred for the extrusion foaming with L/D above 20, most preferably above 25.

In one embodiment, the TPE compositions of this invention are foamed by using an extruder, such as a single or twin screw extruder. Upon releasing the TPE composition from the extruder, the extrudate can be shaped, such as by extruding through a shaping die to form a profile. Other thermoplastic material may be coextruded with the foamed extrudate. Alternatively, the TPE composition can be injected in a mould to produce a foamed thermoplastic part.

In one preferred embodiment, the TPE composition is foamed by using a single crew extruder that includes a two-stage shearing section that includes spaced blisters, and a homogenizing section between the blisters, and a homogenizing section downstream of the blisters. By using this extruder, water can be used as a blowing agent to produce technologically useful foam profiles. This extruder and the method for its use are disclosed in US 5567370.

The foaming agent may include physical blowing agents, chemical blowing agents, or both. Preferably, the blowing agents should be soluble in the thermoplastic phase of the TPE composition at the operating conditions of temperature and pressure, i.e., while in the extruder, and phase separate at atmospheric pressure and ambient temperature, or at a temperature and pressure that is lower than the conditions within the extruder.

The physical blowing agents may include water, hydrocarbons such as pentane, propane and butane, fluorocarbons, hydrofluorocarbons, chlorofluorocarbons, hydrochlorofluorocarbons, nitrogen, and super critical fluids such as carbon dioxide. Nitrogen is the preferred blowing agent.

The physical blowing agents should be used in an amount from 0.1 to 10 parts by weight, and preferably from 0.5 to 5 parts by weight, based on the total weight of the TPE composition and the blowing agent mixture.

Chemical blowing agents include both exothermic and endothermic blowing agents. A very suitable blowing agent is HYOROCEROL^{™} BIH40, which is an endothermic blowing agent, but many other blowing agents may be used as well.

The chemical blowing agents is preferably used in an amount from 0.5 to 10 parts by weight, and more preferably from 1 to 7 parts by weight, based on the total weight of the TPE composition and the blowing agent mixture combined. If necessary, a foaming assistant such as a nucleating agent may be added. These nucleating agents are well known to those skilled in the art, as disclosed in THRONE, James L. Thermoplastic Foams. Hinckley, Ohio: Sherwood Publishers, 1996.

The present invention will be elucidated by the following examples, however without restricting its scope to these specific embodiments.

**Examples**

### Melt strength test description

To test the melt strength and draw ratio at break, compounds were extruded in a Gottfert single screw laboratory extrusiometer (Diameter = 20 mm, L/D = 20) equipped with a capillary die (L = 30 mm, D = 3 mm and an entrance angle of 90°). The throughput was kept at 10 g/min +/- 0.5 g/min for all the tests and was precisely measured for each experiment. Several measured materials were dry mixes of TPE pellets with some additional PP pellets. The extruded strands were always homogeneous, showing rapid mixing and good homogeneity and compatibility of the measured systems.

The extruded polymer strand was drawn in uniaxial extension by a take-up device (Gottfert Rheotens 71.97 apparatus). The distance between the die and the pulling system corresponded to a strand length of Ls = 180 mm. The tensile force necessary for stretching the polymer was recorded as a function of the speed of the wheels of the Rheotens apparatus. The wheel velocity at zero pulling force (Vs) was recorded at the start of the measurement. The acceleration of the wheels of the Rheotens apparatus was kept constant at 2.4 mm/s². The Melt Strength is the maximum tensile force reached, usually just before strand breakage. Melt strength curves were all measured at 170 or 180°C. Draw ratio and stress values as well as apparent elongational viscosities were calculated from the die geometry, material density, measured strength and wheel speed. The swell ratio (V0/Vs) below 1 means that the strand speed measured at the pulling device with no pulling force (Vs) other than its own weight is higher than the average material speed in the die. It corresponds to low viscosity materials. Swell ratio above 1 is characteristic of viscoelastic materials with a strong elastic character

**Material description**

As component (i) High Melt Strength Linear (HMSL) crystalline isotactic polypropylene were used. HMSL PP1 has a MFR (2.16 kg/230°C) of 1 dg/min, an ultra high PI of 28. HMSL PP2 contains 2% ethylene, has a MFR (2.16 kg/230°C) of 3 dg/min, an ultra high PI of 23 and a Vicat softening temperature (ISO 306A/50) of 149°C. Both are produced by the Basell Spherizone process.

Additional thermoplastic polyolefins used in the examples were the following. PRO-FAX^{™} PF 814 (MFR = 2.5 dg/min, 2.16 kg/230°C) is a High Melt Strength Branched (HMSB) polypropylene commercially available from Basell and specifically designed for foamed polyolefin applications. MOPLEN^{™} HP1078 (MFR = 3 dg/min, 2.16 kg/230°C) is a homopolypropylene designed for BOPP film application. It has a PI of 5.3 and is available from Basell. ADSTIF^{™} HA722J is a high crystallinity polypropylene homopolymer (MFR = 3.5dg/min, 2.16 kg/230°C), Vicat softening temperature (ISO 306A/50) of 159°C.

As plasticizer, a paraffinic oil has been used; PRIMOL^{™} 352.

As block copolymer were used either KRATON® MD-6933ES, a very high M_{w} linear styrene-ethylene/butylene-styrene block copolymer having a polystyrene content of 31 % by weight; KRATON G-1651, a high M_{w} linear styrene-ethylene/butylene-styrene block copolymer having a polystyrene content of 33% by weight; or KRATON G-1657, a coupled linear styrene-ethylene/butylene-styrene block copolymer having a polystyrene content of 14% by weight containing 30%w of diblock styrene-ethylene/butylene and a PS block size close to about 5.5 kg/mole.

SEBS 'A' is a very high M_{w} coupled styrene-ethylene/butylene-styrene block copolymer having a polystyrene content of 30% by weight, a butylene content of 63% in the ethylene/butylene block and styrene block size of 41 kg/mole. Its molecular weight by weight (M_{w}) measured in GPC on all coupled and uncoupled species is 390 kg/mole in PS equivalent molecular weight. SEBS 'B' is a coupled styrene-ethylene/butylene-styrene block copolymer having a polystyrene content of 18% by weight, a butylene content close to 40% in the ethylene/butylenes block and styrene block size of 5.5 kg/mole. Moreover, KRATON KG-2705 was used, which is sold as a TPE blend composed of a hydrogenated styrenic block copolymer compounded with oil, a polypropylene and additional stabilisers. KG-2705 has a Hardness of 58 shore A, a Compression Set (CS, 24h at room temperature) of 22% and a density of 900 kg/m³.

As example of a block copolymer different from the styrenic block copolymers, HYTREL^{™} 4056 has been included, a thermoplastic polyester elastomer sold by DuPont. It has a hardness of 35 shore D, a processing temperature range of 165-185°C, and a density of 1170 kg/m³.

SANTOPRENE^{™} 201-64, a TPE available from AES, is a dynamically vulcanized EPDM/PP based TPV. It has a Hardness 5s of 66 Shore A, a density of 970 kg/m³, and a CS of 23% after a 70h of compression at room temperature.

IRGANOX^{™} 1010 and PS 800 are antioxidant stabilizers, mostly active towards radicals and hydroperoxides. IRGANOX 1010 is tetrakis-ethylene-(3,5-di-tertiary-butyl-4-hydroxy-hydrocinnamate) methane. IRGANOX PS 800 is dilauryl thiopropionate. IRGASTAB^{™} NA11 is a crystallinity nucleator from Ciba.

HYDROCEROL^{™} BIH40 is a master batch of endothermic chemical blowing agent available from CLARIANT.

### Example 1

The results of Example 1 are included as comparative experiments 1* and 2*, and inventive experiments 3 and 4 in Table 1. The composition of experiments 1*, 2* and 3 all contained the same amount of thermoplastic polyolefin, but only the composition of experiment 3 contained the High Melt Strength Linear PP HHMSL PP1 as component (i). Component (ii) of the compositions was the same in each case, it was a blend made of 100 parts by weight (pbw) KRATON MD-6933ES (as component ii) + 35pbw MOPLEN HP1078 + 150 pbw PRIMOL 352 modified with 4.76 wt% of different additional plastic polyolefins.

The composition of experiment 1 * contained 4.76% additional HP1078 (PI of 5.3). It exhibited relatively low melt strength properties as measured with the Rheotens. The composition of experiment 2* corresponds to the composition of US 2003/0013813 and contains 4.76% of a long chain BRANCHED high Melt strength polypropylene. This experiment shows that the polypropylene must be linear; there was no significant improvement versus the first experiment. The composition of experiment 3 showed a very significant improvement versus the two first experiments.

The composition of experiment 4 was similar to that of experiment 3, but having a higher content of component (i) of 8.7 %wt. It gave quite similar melt strength performances as in experiment 3 despite the doubling of the content of HMSL PP. Although the die swell ratio is somewhat high, which is usually not appreciated in the industry, it can be concluded that compositions containing up to 10 wt% of component (i) are fully effective up to around 10%, albeit that at 5wt% already significant improvements are found.

**Table 1**

| Experiment n° | | 1 * | 2* | 3 | 4 |
|---|---|---|---|---|---|
| Composition | | | | | |
| (i) HMSL PP1 | wt% | 0 | 0 | 4.76 | 8.7 |
| (ii) TPE | wt% | 100 | 100 | 95.24 | 91.3 |
| total thermoplastic content | wt% | 16.5 | 16.5 | 16.5 | 17.0 |
| | | | 4.76% of PP | 4.76% of | |
| remarks | | | HMS | PP HMS | |
| | | | BRANCHED | LINEAR | |
| Rheotens properties at 180°C | | | | | |
| Maximum pulling Force | N | 0.07 | 0.07 | 0.80 | 0.79 |
| Stress maximum | kPa | 34 | 43 | 209 | 196 |
| Draw Ratio V(Fmax)/V0 | / | 3.4 | 4.3 | 1.85 | 1.75 |
| Swell Ratio | / | <1 | <1 | 1.12 | 1.28 |
| * not according to the invention | | | | | |

### Example 2

This example shows that 3 wt% HMSL PP1 significantly effects the rheological behaviour of various commercial TPEs. The measured melt strength (maximum pulling force as measured in Rheotens 71.97) and the corresponding stress values, when component (i) was included in the composition, were each time far superior compared to the compositions containing the same TPE( ii) without the presence of the HMSL PP1 (i). The maximum apparent elongational viscosity was not only significantly increased but also appeared at higher deformation rates, demonstrating a strain hardening effect.

**Table 2**

| Experiment n° | | 5* | 6 | 7* | 8 | 9* | 10 |
|---|---|---|---|---|---|---|---|
| Composition | | | | | | | |
| (i) HMSL PP1 | wt% | 0 | 2.9 | 0 | 3 | 0 | 2.9 |
| (ii) TPE | wt% | 100 | 97.1 | 100 | 97 | 100 | 97.1 |
| TPE nature | | KRATON | | HYTREL 4056 | | SANTOPRENE | |
| | | KG-2705 | | | | 201-64 | |
| Rheotens properties at 180°C | | | | | | | |
| Maximum pulling force | N | 0.06 | 0.4 | <0.02 | 0.25 | 0.44 | 0.65 |
| Stress maximum | kPa | 43 | 113 | +/-30 | 100 | 124 | 175 |
| Apparent elongational viscosity at 0.2s⁻¹ | kpa.s | 90 | 710 | n.a. | n.a. | 560 | 1000 *0.16s.⁻¹* |
| Max apparent | | | | | | | |
| elongational Viscosity | kpa.s | 120 | 840 | | | 640 | 1000 |
| Elong. deformation rate | s⁻¹ | 0.08 | 0.23 | | | 0.08 | 0.16 |
| Draw Ratio V(Fmax)/V0 | / | 4.8 | 2 | > 10 | 2.8 | 2 | 1.9 |
| Swell Ratio | / | <1 | 1.0 | <1 | <1 | 1.00 | 1.03 |
| *not according to the invention; "n.a." means not analyzed | | | | | | | |

### Example 3

Experiments 11-13, compiled in Table 3, demonstrate the efficiency of the HMSL PP1, used as component (i) to modify the Melt strength of various TPE systems significantly, even at low levels. As TPE in experiment 11 a blend was used of a 100 pbw KRATON MD-6933ES, 35 pbw ADSTIF HA722J and 150 pbw PRIMOL 352. The TPE component in experiment 12 was a mixture of 80 wt% the TPE blend from experiment 11 plus 20 wt% of HYTREL 4056. The TPE component in experiments 13 and 14* was a blend of 100 pbw KRATON G-1651 with 200 pbw of PRIMOL 352.

The compositions 11-13 contained a very small amount of HMSL PP1 as component (i). It had a significant effect on the Melt strength. On the other hand, Experiment 14* contained no HMSL PP and was clearly inferior in rheological performances.

**Table 3**

| Experiment n° | | 11 | 12 | 13 | 14* |
|---|---|---|---|---|---|
| Composition | | | | | |
| (i) HMSL PP | wt% | 1.7 | 1.4 | 3.2 | 0 |
| (ii) TPE blend | wt% | 98.3 | 98.6 | 96.8 | 100 |
| Rheotens properties at 180°C | | | | | |
| Fmax | (N) | 0.65 | 0.45 | 0.45 | < 0.05 |
| Stress max (kPa) | kPa | 202 | 134 | 102 | <7 |
| Draw Ratio V(Fmax)/V0 | n.a. | 2.2 | 2.1 | 1.6 | +/-1.0 |
| Swell Ratio | n.a. | 1.18 | 1.18 | <1 | n.a. |
| *not according to the invention; "n.a." means not analyzed | | | | | |

### Example 4:

In this Example again blends have been used as TPE component. The blend used in Experiments 15* and 17 was made of 30 pbw KRATON MD-6933ES, 5 pbw KRATON G-1657, 17 pbw MOPLEN HP-1078 and 47 pbw PRIMOL 352. In Experiment 15* the TPE blend was used as such. In Experiment 17, 1.5 wt% of HMSL PP1 was added to the blend. The composition of the blend used in experiment 16* was the same as that in Experiment 17, other than that the 1.5 pbw of HMSL PP had been replaced by MOPLEN HP-1078. These compositions were then used for extrusion foaming experiments.

The foaming process was the following: the TPE was dry mixed with 2% of BIH40 and fed to the single screw extruder. The extruder temperature profile was: hopper/220°C/200°C/168°C/150°C/die. The extruder screw speed was set at either 50 rpm or at 80 rpm.

It is clear from Table 4 that the addition of 1.3 wt% of HMSL PP1 (experiment 17) did not adversely affect the hardness or compression set values of the total composition, but did allow for a significant reduction in the density of a foamed article made thereof (at 50 rpm) and/or a significantly reduced water absorption (at 80 rpm) while keeping a foamed density below 600 kg/m³. Low water absorption means most of the cells remained closed during the foaming stage, which can be attributed to the higher melt strength of TPE according to the invention.

The composition of experiment 17 with its combination of low hardness, low compression set, and intrinsic properties upon foaming of low water absorption and low foam density, is clearly very suitable for applications like foamed sealing profiles used in the automotive industries.

**Table 4**

| experiment n° | | 15* | 16* | 17 |
|---|---|---|---|---|
| Composition | | | | |
| (i) HMSL PP | wt% | 0 | 0 | 1.5 |
| (ii) TPE blend | wt% | 100 | 100 | 98.5 |
| Properties measured before foaming | | | | |
| Hardness 0 s | | 61 | 66 | 62 |
| | Shore A | | | |
| Hardness 30 s | | 57 | 61 | 56 |
| CS 24h at 100°C | | 51 | 52 | 51 |
| | % | | | |
| CS 72h at 70°C | | 43 | 46 | 43 |
| Foamed with extruder screw speed 50 rpm | | | | |
| Density | kg/m³ | 620 | 620 | 470 |
| Water absorption | % | 17 | 17 | 18 |
| Foamed with extruder screw speed 80 rpm | | | | |
| Density | kg/m³ | n.a. | 630 | 570 |
| Water absorption | % | n.a. | 19 | 3 |
| *not according to the invention; "n.a." means not analyzed | | | | |

### Example 5:

This example 5 demonstrates the effect of various mixing procedures. Blends and premixes (i.e., containing component (i)) were mixed in double screw extruder ensuring an efficient mixing without degradation (see table 5).

**Table 5**

| | Blend/premix | B1 | B4 | A2 | A3 |
|---|---|---|---|---|---|
| TPE | SEBS MD-6933 | 100 | 100 | | |
| | SEBS G1657 | | | 100 | 100 |
| | PRIMOL 352 | 150 | 150 | 50 | 50 |
| | MOPLENHP1078 | 40 | | 50 | 25 |
| | ADSTIF HA722J | | 35 | | |
| | IRGANOX 1010 | 0.2 | 0.2 | 0.2 | 0.2 |
| | IRGANOX PS800 | 0.2 | 0.2 | 0.2 | 0.2 |
| i | HMS LPP1 | 0 | 5 | 0 | 25 |
| | (i) % | 0 | 1.7 | 0 | 12.5 |

The granules so prepared were dry mixed with 2% by weight of BIH40 and optionally with separate granules of HMSL PP1 following the ratio indicated in table 6. Those ratios ensure that the final composition corresponds to a TPE (ii) modified with from 0% to 4.2% of (i) The resulting systems were fed into the hopper of a single screw extruder EXTRUDEX FDN20.25 a L/D 25 extruder with as temperature profile : hopper/200°C/210°C/168°C/150°C/die. The extruder screw speed was set at 80 rpm.

**Table 6**

| Experiment n° | 18* | 19 | 20 | 21 | 22 |
|---|---|---|---|---|---|
| B1 | 100 | 100 | 100 | | |
| A2 | 15 | 15 | | | 15 |
| B4 contains 1.7%(i) | | | | 100 | 100 |
| A3 contains 12.5%(i) | | | 15 | | |
| HMSL PP1 100%(i) | | 5 | | | |
| total (i) % | 0.0 | 4.2 | 1.6 | 1.7 | 1.5 |
| TPE (ii) % | 100.0 | 95.8 | 98.4 | 98.3 | 98.5 |
| Extrusion foaming step +2% BIH40, melt T at die=163-165°C | | | | | |
| Av. foam density kg/m³ | 680 | 560 | 580 | 590 | 510 |
| density variation (STD) | 28 | 65 | 36 | 47 | 47 |
| Av. water absorption % | 14 | 2 | 1.7 | 1.7 | 1.6 |
| water abs. variation | 7.3 | 2.3 | 1 | 0.7 | 0.7 |
| (STD) | | | | | |
| Surface aspect | smooth | uneven | smooth | uneven | uneven |
| | *not according to the invention | | | | |

It is clear from Table 6 that the absence of component (i) (see experiment 18*) gave the worst foaming results. This shows once again the necessity of component (i) in the final highly oiled TPE mixture. The target foam is characterised by a low density, a minimum water absorption (automotive foamed seals), a nice smooth skin as well as a minimum variation of those characteristics during the foamed profile production. By comparing the experiments 19 with 20, 21 and 22 all according to this invention, we see that the preferred method to incorporate (i) with the TPE is to prepare a premix with at least part of the TPE ingredients before reaching the processing stage (here extrusion foaming). Experiment 19, although containing more component (i), gave similar performance. However, the results are characterised by a larger variation of the foam performance. The premixing procedure utilised in experiment 20 gave in our experiments the best balance of density, water absorption, consistency and surface aspect.

### Example 6:

This example 6 shows the effect on melt strength of various premixes with preferred compositions. The high melt strength linear PP(i) was mixed with various TPEs to form the premixes (iii) presented in table 7. Five premixes (iii) as well as a comparative TPE blend (iia1) TPE were mixed in a double screw extruder at minimum 180°C and maximum 220°C as maximum compounding temperatures and with direct injection of part of the liquid ingredient (here an oil) before the first mixing zone, the remaining being added after the first mixing zone and before the final mixing zone ensuring good mixing without degradation. A TPE (iib) representing the remainder of the component (ii), not yet used in the preparation of the premix was a SEBS based TPE with the following formulation: 100 pbw of SEBS 'A' + 150 pbw of PRIMOL 352 + 40 pbw of MOPLEN HP1078 + 0.2 pbw of IRGANOX 1010 and 0.2 pbw of PS800. This TPE blend is referred here after as (iib3). It is characterised by a hardness after 30s of 41 Shore A and a Compression Set of 36% after three days at 70°C and of 13% after 24h at ambient temperature.

**Table 7**

| Blend or premix | iia1 | iii1 | iii2 | iii3 | iii4 | iii5 |
|---|---|---|---|---|---|---|
| SEBS G1657 | 100 | 100 | 100 | 100 | 100 | |
| SEBS 'B' | | | | | | 100 |
| PRIMOL 352 | 50 | 50 | 50 | 50 | 50 | 50 |
| MOPLEN HP1078 | 50 | 25 | 25 | | | |
| IRGANOX 1010 | 0.2 | 0.2 | 0.2 | 0.2 | 0.2 | 0.2 |
| IRGANOX PS800 | 0.2 | 0.2 | 0.2 | 0.2 | 0.2 | 0.2 |
| IRGASTAB NA11 | | | 1.5 | 1.5 | 1.5 | 1.5 |
| PPHMSL1 (i) | | 25 | | | | |
| PPHMSL2 (i) | | | 25 | 50 | 35 | 35 |
| (i) % | 0 | 12.5 | 12.4 | 24.8 | 18.7 | 18.7 |

The granules so prepared were dry mixed with the (iib3) granules following the ratio presented in table 8. These compositions were then evaluated both in melt strength with the Rheotens apparatus at 170°C and in extrusion foaming. In the foaming experiments, 2% by weight of BIH40 was dry mixed with the granules. The resulting compositions were fed into the hopper of a single screw extruder EXTRUDEX with as temperature profile: hopper /220°C/200°C/160°C/145°C/die and equipped with a tube die. The extruder screw speed was set at 50 or 80 rpm and both the melt temperature and the pressure were recorded just before the die entrance.

**Table 8**

| experiment n° | 23* | 24* | 25 | 26 | 27 | 28 | 29 |
|---|---|---|---|---|---|---|---|
| iib3 | 100 | 100 | 100 | 100 | 100 | 100 | 100 |
| iia1 | | 15 | | | | | |
| iii1 (12.5% (i)) | | | 15 | | | | |
| iii2 (12.4% (i)) | | | | 15 | | | |
| iii3 (24.8% (i)) | | | | | 15 | | |
| iii4 (18.7% (i)) | | | | | | 15 | |
| iii5 (18.7% (i)) | | | | | | | 15 |
| total (i) % | 0 | 0 | 1.6 | 1.6 | 3.2 | 2.4 | 2.4 |
| TPE (ii) % | 100 | 100 | 98.4 | 98.4 | 96.8 | 97.6 | 97.6 |
| Rheotens results at 170°C (Melt strength) | | | | | | | |
| Max pulling force | 0.042 | 0.033 | 0.151 | 0.072 | | | |
| (N) | | | | | | | |
| 'melt strength' | | | | | | n.a. | |
| Swell ratio (V0/Vs) | 0.58 | 0.60 | 1.0 | 0.72 | | n.a. | |
| Max draw ratio | 5 | 6.1 | 4 | 5.2 | | | |
| Vfmax/V0 | | | | | | n.a. | |
| Max elongational | 2.9 | 3.7 | 4 | 3.7 | | | |
| ratio (Vfmax/Vs) | | | | | | n.a. | |
| Max stress (kPa) | 30 | 29 | 86 | 53 | | n.a. | |
| Extrusion foaming step +2% BIH40 | | | | | | | |
| screw speed (rpm) | 80 | 50 | 50 | 80 | 80 | 80 | 80 |
| melt T at die (°C) | 160 | 157 | 159 | 159 | 160 | 158 | 158 |
| Die pressure | 27 | 23 | 31 | 26 | 28 | 26 | 28 |
| (bar) or (10⁵Pa) | | | | | | | |
| Average foam | 730 | 700 | 500 | 620 | 620 | 580 | 600 |
| density (kg/m³) | | | *°380* | | *°560* | | |
| Average water | 3 | 2.5 | 0.5 | 8 | 0 | 14 | 24 |
| absorption (%) | | | *°71* | | *°8* | | |
| *° The italic data were measured on carefully non pulled strands during foaming* | | | | | | | |
| * not according to the invention | | | | | | | |

Experiment 23* provides the results of the TPE (iib3) when used by itself. The results show in the Rheotens measurements a high fluidity (swell ratio below 1), a low melt strength and a medium max elongational ratio. In the foaming experiment, this experiment gave a non attractive high density foam. In Experiment 24, blend (iib3) is mixed with blend (iia1). This comparative composition again contains no High Melt Strength Linear PP (i). This second experiment showed a low melt strength as well. In the foaming experiment, it gave a non attractive density of 700 kg/m³. Experiment 25 and 26 are according to the invention. These experiments show increased melt strength while retaining or even improving the maximum elongational ratio. In the extrusion foaming evaluation, very significant density reductions were obtained albeit that the lowest densities were obtained at the expense of the water absorption. The HMSL PP1 characterised by a high Polydispersity Index of PI=28 gave in experiment 25 clearly higher performance compared to the close experiment 26 that contained HMSL PP2 with PI=23. This clearly shows the need to utilise HMSLPP (i) characterised by PI>20. Experiments 27-29 gave results close to 26 with the best density/water absorption results obtained with the highest content of (i) in experiment 27.

The following table 9 (with all components in parts by weight) provides data showing the necessity to properly mix the premix (iii) without degrading it.

**Table 9**

| premix | iii6** | iii7 | iii8 | iii9** |
|---|---|---|---|---|
| SEBS | 100 | 100 | 100 | 100 |
| PRIMOL 352 | 100 | 50 | 50 | 50 |
| MOPLEN HP1078 | | 25 | 25 | 25 |
| Antioxidant (Irg1010/PS800) | 0.210.2 | 0.210.2 | 0.2/0.2 | 0.2/0.2 |
| HMSL PP1 (i) | | | 25 | |
| HMSL PP2 (i) | 50 | 25 | | 25 |
| processing aspects (history in the extruder) | | | | |
| double screw extruder | yes | yes | yes | yes |
| screw profile adapted for shear | | | | |
| sensitive materials | yes | yes | no | no |
| max. melt temperature | 191 °C | 192°C | 220°C | non available expected >220°C |
| liquid ingredient present before first mixing zone | 100 | 50 | yes < 25 | no |
| appearance | inh.; not mixed | hom.; trans1 | hom.; transl | yellowish; transp; hom. |
| Rheotens 170°C max pulling force (N) | n.a. | 0.23 | 0.6 | 0.01 |
| conclusion | NOT mixed** | OK | OK | Degraded** |
| ** not according to the invention; "inh." Means inhomogeneous; "hom." means homogeneous; "transl." means translucent; "transp." means transparent | | | | |

The premixes iii7 and iii8 were properly mixed without significant degradation. The premix iii6 was produced in a suitable mixing equipment with suitable settings, but the large amount of liquid ingredient injected in the extruder before the melting of the other ingredient (before the first mixing zone) created a over-lubrication effect well known to people skilled in the art of mixers. This effect reduced the mixing efficiency of the extruder to the extent that the final premix was inhomogeneous and not properly mixed. The premix iii9 was mixed using too severe conditions that led to significant degradation of the premix. The extruder history therefore made the premix unsuitable for use as high melt strength additive. It is believed that the presence of high shear mixing zones combined with high melt temperature and the absence of any liquid ingredient at first mixing zone created significant shear and/of thermal degradation of the premix.

## Claims

1. A high melt strength thermoplastic elastomer composition, comprising:
(i) at least one linear crystalline polyolefin, having a melting temperature (Tm) of at least 100°C and a Polydispersity Index (PI) of more than 20, determined by means of an isothermal dynamic frequency sweep at 190°C and calculated by means of the equation PI=100.000/Gc, wherein Gc is expressed in Pascal and represents the crossover modulus (Gc=:G' =G") and
(ii) at least one thermoplastic elastomer (TPE) or a blend behaving as TPE, wherein the TPE or the blend are compatible with the polyolefin (i), and have a compression set below 50°/4 at ambient temperature after 24h compression (ASTM D395-03, Compression Set under constant deflection in air"), wherein the amount of component (i) is in the range of 0.1 to 15 wt% calculated on the whole of (i) and (ii).

2. A high melt strength thermoplastic elastomer composition as claimed in claim 1 wherein component (i) is derived from propylene as predominant or sole monomer, having a melting temperature of at least 930°C.

3. A high melt strength thermoplastic elastomer composition as claimed in claim 1 or 2 wherein component (i) occurs in a proportion of from 0.1 to 10 wt%.

4. A high melt strength thermoplastic elastomer composition according to claim 1, wherein the components (i) and (ii) have viscosities not differing more than a factor 10 under the mixing conditions, said viscosities having been measured according to ASTM-D3835.

5. A high melt strength thermoplastic elastomer composition according to any one of claims 1 to 4, wherein component (ii) is selected from one or more of:
thermoplastic polyurethane elastomers;
thermoplastic polyester elastomers;
polyesteramide and polyetherester amide thermoplastic elastomers as well as polyether block amide thermoplastic elastomers;
thermoplastic elastomers based on polystyrene-polydiene block copolymers; poly-alpha-olefin based thermoplastic elastomers, and
elastomer-thermoplastic blends, when dynamically vulcanized.

6. A high melt strength thermoplastic elastomer composition according to claim 5, wherein component (ii) is selected from one or more styrenic block copolymers comprising at least two blocks of polystyrene or similar rigid block segment and at least one block of potentially hydrogenated poly(conjugated diene) or similar elastomeric block segment within the polymer chain.

7. A high melt strength thermoplastic elastomer composition according to claim 6, wherein the elastomeric block(s) of said styrenic block copolymer(s) have been selectively hydrogenated until a residual ethylenic unsaturation of less than 20% and preferably less than 10% of the original value.

8. A high melt strength thermoplastic elastomer composition according to claim 5, wherein component (ii) is a dynamically cured TPE composition of a blend of either a vulcanizable elastomer prepared by the polymerization of one or more alpha-monolefins, optionally with a polyene, or a butyl rubber dispersed into a resinous thermoplastic polymer and cured while continuously mixing and shearing the blend.

9. A high melt strength thermoplastic elastomer composition according to any one of claims 5-8, wherein component (ii) is a blend which comprises at least 15 to 90 wt% of one or more elastomers as defined in claim 5, of from 0 to 40 wt% of one or more thermoplastic polyolefins different from component (i), and of from 5 to 90 wt% of one or more plasticizers calculated on the weight of the complete TPE blend (ii).

10. A premix (iii) useful as a homogeneous melt strain hardening additive for the preparation of a composition according to any one of claim 1 to 9, obtainable by extrusion mixing of 10 to 60 wt% of component (i) and 40 to 90 wt% of component (ii), relative to the weight of components (i) and (ii).

11. Process for the preparation of the premix (iii) according to claims 10, wherein the components are mixed in a single screw extruder or a twin screw extruder, wherein the extruder screws are **characterized by** at least one mixing zone and by a screw design ensuring an efficient mixing without degrading the component (i), which is sensitive to radical degradation.

12. A process for the preparation of a composition according to any one of claims 1 to 9, wherein the premix of claim 10 is mixed with an amount of a component (ii) sufficient to reduce the content of component (i) from a range of 10 to 60 wt% to the defined range of from 0.1 to 15 wt%, preferably from 0.1 to 10 wt%, more preferably from 1 to 5 wt%.

13. Process for the preparation of shaped thermoplastic elastomeric articles, **characterized in that** a high melt strength thermoplastic elastomer composition according to any one of the claims 1 to 9 is used as starting material, and comprising a non-supported elongational step, like foaming, film blowing, fiber drawing, blow moulding, profile extrusion, or thermoforming.

14. Shaped flexible thermoplastic elastomer articles, made of a high melt strength thermoplastic elastomer composition according to claims 1-9, obtainable by the process of claim 13.

## Patentansprüche

1. Hochschmelzfeste thermoplastische Elastomerzusammensetzung umfassend:
(i) wenigstens ein lineares kristallines Polyolefin, das eine Schmelztemperatur (Tm) von wenigstens 100°C und einen Polydispersitätsindex (PI) von mehr als 20 aufweist, bestimmt mittels eines isothermischen dynamischen Frequenzdurchlaufs bei 190°C und berechnet mittels der Gleichung PI = 100.000 Gc, wobei Gc in Pascal ausgedrückt wird und das Crossover Modul (Gc = G' = G") darstellt, und
(ii) wenigstens ein thermoplastisches Elastomer (TPE) oder eine Mischung, die sich wie ein TPE verhält, worin das TPE oder die Mischung mit dem Polyolefin (i) kompatibel sind und einen Druckverformungsrest von unter 50% bei Raumtemperatur nach 24 Stunden Druckverformung (ASTM D395-03, "Compression Set under constant deflection in air") aufweisen, und worin die Menge des Bestandteils (i) im Bereich von 0,1 bis 15 Gew% liegt berechnet in Bezug auf die Gesamtheit aus (i) und (ii).

2. Hochschmelzfeste thermoplastische Elastomerzusammensetzung nach Anspruch 1, worin der Bestandteil (i) von Polypropylen als überwiegendes oder einziges Monomer abgeleitet ist und der eine Schmelztemperatur von wenigstens 130°C aufweist.

3. Hochschmelzfeste thermoplastische Elastomerzusammensetzung nach Anspruch 1 oder 2, worin der Bestandteil (i) in einem Verhältnis von 0,1 bis 10 Gew% auftritt.

4. Hochschmelzfeste thermoplastische Elastomerzusammensetzung nach Anspruch 1, worin die Bestandteile (i) und (ii) Viskositäten aufweisen, die sich unter den Mischungsbedingungen um nicht mehr als den Faktor 10 unterscheiden und wobei die Viskositäten gemäß ASTM-D3835 gemessen wurden.

5. Hochschmelzfeste thermoplastische Elastomerzusammensetzung nach einem der Ansprüche 1 bis 4, worin der Bestandteil (ii) ausgewählt ist aus einem oder mehreren von:
Thermoplastischen Polyurethan Elastomeren;
Thermoplastischen Polyester Elastomeren;
Thermoplastischen Polyesteramid- und Polyetheresteramid-Elastomeren ebenso wie Thermoplastischen Polyether-Block -Amid Elastomeren;
Thermoplastischen Elastomeren basierend auf Polystyrol-Polydien-B lock-Copolymeren;
auf Poly-alpha-Olefinen basierenden Thermoplastischen Elastomeren, und Mischungen aus Elastomeren und Thermoplasten, wenn diese dynamisch vulkanisiert wurden.

6. Hochschmelzfeste thermoplastische Elastomerzusammensetzung nach Anspruch 5, worin der Bestandteil (ii) ausgewählt ist aus einem oder mehreren Styrol-Blockcopolymeren umfassend wenigstens zwei Polystyrolblöcke oder ein ähnlich hartes Blocksegment und wenigstens einen Block eines potentiell hydrierten Poly(konjugierten Diens) oder eines ähnlichen elastomeren Blocksegments in der Polymerkette.

7. Hochschmelzfeste thermoplastische Elastomerzusammensetzung nach Anspruch 6, worin der elastomere Block oder die elastomeren Blöcke des Styrolblockcopolymers oder der Styrolblockcopolymere bis zu einer ethylenischen Restungesättigtheit von weniger als 20% und bevorzugt von weniger als 10% des ursprünglichen Wertes selektiv hydriert wurden.

8. Hochschmelzfeste thermoplastische Elastomerzusammensetzung nach Anspruch 5, worin der Bestandteil (ii) eine dynamisch gehärtete TPE Zusammensetzung einer Mischung aus entweder einem vulkanisierbaren Elastomer, hergestellt durch Polymerisation eines oder mehrerer alpha-Monoolefine, wahlweise mit einem Polyen, oder ein Butylkautschuk ist, der in einem harzartigen thermoplastischen Polymer dispergiert ist und gehärtet wurde indem die Mischung kontinuierlich gemischt und Scherkräften ausgesetzt wurde.

9. Hochschmelzfeste thermoplastische Elastomerzusammensetzung nach einem der Ansprüche 5 bis 8, worin der Bestandteil (ii) eine Mischung ist, die wenigstens 15 bis 90 Gew% eines oder mehrerer Elastomere gemäß der Definition des Anspruchs 5 umfaßt, 0 bis 40% eines oder mehrerer thermoplastischer Polyolefine, die von dem Bestandteil (i) verschieden sind und 5 bis 90 Gew% eines oder mehrerer Weichmacher, berechnet auf der Basis des Gewichtes der gesamten TPE Mischung (ii).

10. Vormischung (iii) geeignet als homogenes Schmelzverformungshärtungsadditiv zur Herstellung einer Zusammensetzung gemäß einem der Ansprüche 1 bis 9, erhältlich durch Extrusionsmischen von 10 bis 60 Gew% des Bestandteils (i) und 40 bis 90 Gew% des Bestandteils (ii) bezogen auf das Gewicht der Bestandteile (i) und (ii).

11. Verfahren zur Herstellung der Vormischung (iii) nach Anspruch 10, worin die Bestandteile in einem Einschneckenextruder oder einem Zwillingsschneckenextruder gemischt werden und worin die Extruderschnecken durch wenigstens eine Mischzone **gekennzeichnet** sind und durch ein Schneckendesign, das ein effizientes Mischen ohne die Zersetzung des Bestandteils (i) garantiert, der in Bezug auf radikalische Zersetzung empfindlich ist.

12. Verfahren zur Herstellung einer Zusammensetzung nach einem der Ansprüche 1 bis 9, worin die Vormischung gemäß Anspruch 10 mit einer Menge des Bestandteils (ii) gemischt wird, der ausreichend ist, den Gehalt an Bestandteil (i) von einem Bereich von 10 bis 60 Gew% auf den definierten Bereich von 0,1 bis 15 Gew% zu reduzieren, vorzugsweise von 0,1 bis 10 Gew%, bevorzugter von 1 bis 5 Gew%.

13. Verfahren zur Herstellung von geformten thermoplastischen Elastomergegenständen, **dadurch gekennzeichnet, dass** eine hochschmelzfeste thermoplastische Elastomerzusammensetzung gemäß einem der Ansprüche 1 bis 9 als Ausgangsmaterial verwendet wird und umfassend einen nichtgeträgerten Elongationsschritt wie Aufschäumen, Folienblasen, Faserziehen, Blasformen, Profilextrusion oder Thermoformen.

14. Geformte flexible thermoplastische elastomere Gegenstände hergestellt aus einer hochschmelzfesten thermoplastischen Elastomerzusammensetzung gemäß den Ansprüchen 1 bis 9, erhältlich durch das Verfahren nach Anspruch 13.

## Revendications

1. Composition d'élastomère thermoplastique ayant une grande résistance à la fusion, comprenant :
(i) au moins une polyoléfine cristalline linéaire, ayant une température de fusion (Tm) d'au moins 100°C et un indice de polydispersité (Pi) de plus de 20, déterminé au moyen d'un balayage de fréquence dynamique isotherme à 190°C et calculé au moyen de l'équation Pi = 100 000/Gc, Gc étant exprimé en Pascal et représentant le module de recouvrement (Gc = G' = G") et
(ii) au moins un élastomère thermoplastique (TPE) ou un mélange qui se comportent comme un TPE, le TPE ou le mélange étant compatibles avec la polyoléfine (i) et ayant une déformation de compression inférieure à 50% à température ambiante après 24 h de compression (ASTM D395-03, « Compression Set under constant deflection in air »), la quantité de composant (i) étant dans la plage de 0,1 à 15 % en poids calculée par rapport à l'ensemble de (i) et (ii).

2. Composition d'élastomère thermoplastique ayant une grande résistance à la fusion selon la revendication 1 dans laquelle le composant (i) est dérivé du propylène en tant que monomère prédominant ou unique, ayant une température de fusion d'au moins 130°C.

3. Composition d'élastomère thermoplastique ayant une grande résistance à la fusion selon la revendication 1 ou 2, dans laquelle le composant (i) est présent en une proportion de 0,1 à 10% en poids.

4. Composition d'élastomère thermoplastique ayant une grande résistance à la fusion selon la revendication 1, dans laquelle les composants (i) et (ii) ont des viscosités ne différant pas d'un facteur de plus de 10 dans les conditions de mélange, lesdites viscosités ayant été mesurées selon ASTM-D3835.

5. Composition d'élastomère thermoplastique ayant une grande résistance à la fusion selon l'une quelconque des revendications 1 à 4, dans laquelle le composant (ii) est un ou plusieurs constituants choisis parmi :
- Les élastomères de polyuréthane thermoplastiques ;
- Les élastomères de polyester thermoplastiques ;
- Les élastomères thermoplastiques de polyesteramide et de polyétherester, ainsi que les élastomères thermoplastiques blocs poly éther / amide ;
- Les élastomères thermoplastiques à base de copolymères blocs polystyrène-polydiène ;
- Les élastomères thermoplastiques à base de poly-alpha-oléfine, et
- Les mélanges thermoplastiques d'élastomères, vulcanisés de manière dynamique.

6. Composition d'élastomère thermoplastique ayant une grande résistance à la fusion selon la revendication 5, dans laquelle le composant (ii) est choisi parmi un ou plusieurs copolymères blocs styréniques comprenant au moins deux blocs de polystyrène ou un segment de bloc rigide similaire, et au moins un bloc de poly(diène conjugué) potentiellement hydrogéné ou un segment de bloc élastomère similaire dans la chaîne de polymère.

7. Composition d'élastomère thermoplastique ayant une grande résistance à la fusion selon la revendication 6, dans laquelle le(s) bloc(s) élastomère(s) dudit/desdits copolymère(s) bloc(s) styrénique(s) ont été sélectivement hydrogénés jusqu'à une insaturation éthylénique résiduelle de moins de 20 % et de préférence de moins de 10 % de la valeur originale.

8. Composition d'élastomère thermoplastique ayant une grande résistance à la fusion selon la revendication 5, dans laquelle le composant (ii) est une composition de TPE vulcanisée de manière dynamique d'un mélange d'un élastomère vulcanisable préparé par polymérisation d'un ou plusieurs mono-alpha-oléfines, éventuellement avec un polyène, ou un caoutchouc butyle dispersé dans un polymère thermoplastique résineux et vulcanisé sous mélange et cisaillement continu du mélange.

9. Composition d'élastomère thermoplastique ayant une grande résistance à la fusion selon l'une quelconque des revendications 5 à 8, dans laquelle le composant (ii) est un mélange qui comprend au moins 15 à 90 % en poids d'un ou plusieurs élastomères comme défini dans la revendication 5, de 0 à 40 % en poids d'une ou plusieurs polyoléfines thermoplastiques différentes du composant (i), et de 5 à 90 % en poids d'un ou plusieurs plastifiants calculé sur la base du poids du mélange de TPE total (ii).

10. Prémélange (iii) utile en tant qu'additif d'écrouissage à chaud homogène pour la préparation d'une composition selon l'une quelconque des revendications 1 à 9, pouvant être obtenu par mélange par extrusion de 10 à 60 % en poids de composant (i) et de 40 à 90 % en poids du composant (ii) par rapport au poids des composants (i) et (ii).

11. Procédé pour la préparation du prémélange (iii) selon la revendication 10, dans lequel les composants sont mélangés dans une extrudeuse à simple vis ou une extrudeuse à deux vis, dans lequel les vis d'extrudeuse sont **caractérisées en ce qu'**elles comportent au moins une zone de mélange et par une conception de vis assurant un mélange efficace sans dégrader le composant (i), qui est sensible à la dégradation radicalaire.

12. Procédé pour la préparation d'une composition selon l'une quelconque des revendications 1 à 9, dans lequel le prémélange de la revendication 10 est mélangé avec une quantité d'un composant (ii) suffisante pour réduire la teneur en composant (i) d'une plage de 10 à 60 % en poids jusqu'à la plage définie de 0,1 à 15 % en poids, de préférence de 0,1 à 10 % en poids, plus préférablement de 1 à 5 % en poids.

13. Procédé pour la préparation d'articles élastomères thermoplastiques formés, **caractérisé en ce qu'**une composition d'élastomère thermoplastique ayant une grande résistance à la fusion selon l'une quelconque des revendications 1 à 9 est utilisée en tant que matériau de départ, et comprenant une étape d'allongement sans support, tel qu'un moussage, un soufflage de feuille mince, un fibrage, un moulage par extrusion-soufflage, une extrusion de profilé ou un thermoformage.

14. Articles d'élastomère thermoplastiques formés constitués d'une composition d'élastomère thermoplastique ayant une grande résistance à la fusion selon les revendications 1 à 9, pouvant être obtenus par le procédé de la revendication 13.
